# EUROPÄISCHE PATENTSCHRIFT

(11) **EP 2 206 900 B1**
(45) Veröffentlichungstag und Bekanntmachung des Hinweises auf die Patenterteilung: **09.11.2011**
(21) Anmeldenummer: 09175663.5
(22) Anmeldetag: 11.11.2009
(51) Int. Cl.: F01N 13/18, F01N 13/08, F16L 19/02, F16L 23/032

(54) **Flanschverbindung**
Flange connection
Bride de liaison

(30) Priorität: 23.12.2008 DE 102008062917
(43) Veröffentlichungstag der Anmeldung: 14.07.2010
(73) Patentinhaber: J. Eberspächer GmbH & Co. KG, 73730 Esslingen (DE)
(72) Erfinder: Hanitzsch, Robert, 71394 Kernen (DE); Spieth, Arnulf, 73269 Hochdorf (DE)
(74) Vertreter: BRP Renaud & Partner

(56) Entgegenhaltungen:
- EP-A1- 1 420 166
- DE-B1- 1 650 070
- US-A- 3 135 538
- US-A- 4 721 315

## Beschreibung

Die vorliegende Erfindung betrifft eine Flanschverbindung einer Abgasanlage einer Brennkraftmaschine, insbesondere eines Kraftfahrzeugs mit den Merkmalen des Oberbegriffs des Anspruchs 1.

Aus der US 4,721,315 ist eine Flanschverbindung in einer Abgasanlage einer Brennkraftmaschine bekannt, mit deren Hilfe ein Rohrkörper der Abgasanlage an einem anderen Bauteil der Abgasanlage befestigt werden kann. Hierzu weist die Flanschverbindung einen ringförmigen Flansch auf, der mehrere Befestigungsstellen zum Verbinden mit dem anderen Bauteil aufweist. Die bekannte Flanschverbindung umfasst ein Dichtungselement, das durch eine geschlossen umlaufende Sicke gebildet ist und eine Oberflächenkontur aufweist, die zu einer Homogenisierung der Flächenpressung zwischen den Befestigungsstellen führt.

Flanschverbindungen werden bei Abgasanlagen zum Befestigen eines Rohrkörpers der Abgasanlage an einem anderen Bauteil verwendet, wobei es sich beim anderen Bauteil um ein weiteres Bauteil der Abgasanlage oder um ein Bauteil der Brennkraftmaschine handeln kann. Bei bestimmten Anwendungen kann dabei ein Endbereich des Rohrkörpers der Abgasanlage eine Rohrtulpe, also einen Endabschnitt mit sich aufweitendem Querschnitt aufweisen. Eine hierfür geeignete Flanschverbindung weist dann einen ringförmigen Flansch auf, der den Rohrkörper an einer vom anderen Bauteil abgewandten Seite der Rohrtulpe umschließt, wobei der Flansch mehrere Durchgangsöffnungen für eine Verschraubung mit dem anderen Bauteil aufweist. Eine derartige Flanschverbindung findet sich beispielsweise bei der Anbindung der Abgasanlage an eine Turbine eines Abgasturboladers. Aus Bauraumgründen kann es dabei erforderlich sein, einen Flansch zu verwenden, der nur zwei, einander diametral gegenüberliegende Durchgangsöffnungen für die Verschraubung aufweist. Es hat sich gezeigt, dass bei derartigen

Flanschverbindungen Undichtigkeiten auftreten können, so dass Abgas im Bereich der Flanschverbindung aus der Abgasanlage austreten kann. Außerdem kann es aufgrund von Wechselbelastungen bzw. Schwingungen zu Relativbewegungen und somit zu Verschleiß kommen.

Die vorliegende Erfindung beschäftigt sich mit dem Problem, für eine Flanschverbindung der eingangs genannten Art eine verbesserte Ausführungsform anzugeben, die sich insbesondere dadurch auszeichnet, dass sie eine erhöhte Dichtigkeit aufweist.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, zumindest eine Oberflächenkontur zwischen dem Flansch und dem anderen Bauteil nicht eben, also zweidimensional, sondern dreidimensional zu formen, und zwar gezielt so, dass sich im montierten Zustand der Flanschverbindung zwischen den Befestigungsstellen eine homogenisierende Wirkung für die Flächenpressung einstellt. Die Erfindung nutzt hierbei die Erkenntnis, dass bei vergleichsweise großen Abständen zwischen benachbarten Befestigungsstellen bei ebenen Oberflächenkonturen zwischen zwei aneinander anliegenden Bauteilen im Bereich der jeweiligen Befestigungsstelle eine höhere Flächenpressung vorliegt als zwischen benachbarten Befestigungsstellen. Durch eine von einer ebenen Oberflächenkontur abweichende Formgebung für die Oberflächenkontur kann die Flächenpressung zwischen benachbarten Schraubstellen erhöht werden, was zu einer Homogenisierung der Flächenpressung führt. Bei einer in Umfangsrichtung vergleichmäßigen Flächenpressung kommt es zu einer verbesserten Dichtungswirkung in der Flanschverbindung.

Die speziell geformte Oberflächenkontur kann dabei entweder zwischen dem Flansch und der Rohrtulpe oder zwischen der Rohrtulpe und dem anderen Bauteil angeordnet bzw. ausgebildet sein.

Die Oberflächenkontur kann entsprechend einer speziellen Ausführungsform so geformt sein, dass der Flansch im montierten Zustand elastisch verformt ist, und zwar derart, dass sich die gewünschte homogenisierende Wirkung für die Flächenpressung zwischen den Schraubstellen ergibt. Diese Weiterbildung nutzt dabei die Erkenntnis, dass bei Flanschverbindungen mit ebenen Kontaktflächen die variierende Flächenpressung vorwiegend dadurch entsteht, dass sich der Flansch beim Herstellen der Verbindungen, z.B. beim Anziehen der Schraubstellen elastisch verformt. Durch die vorgeschlagene Formgebung der Oberflächenkontur kann diese Verformung quasi invers vorweggenommen werden, so dass die sich beim Befestigen, also z.B. beim Anziehen der Schraubverbindungen ergebende Verformung des Flansches ausgeglichen wird, was zur gewünschten Homogenisierung der Flächenpressung zwischen den Befestigungsstellen führt.

Die dabei erzielte "Homogenisierung" ist nicht absolut zu verstehen, sondern relativ mit Bezug auf eine herkömmliche Flanschverbindung mit ebenen Oberflächenkonturen. Real wird sich eine in den Kontaktflächen verlaufende Isobare in Form eines geschlossenen Profils einstellen, die innerhalb der Kontaktfläche bei einem ebenen Flansch radial und bei einem konischen Flansch auch axial wandern kann.

Die speziell geformte Oberflächenkontur kann an der Rohrtulpe und/oder am Flansch und/oder am anderen Bauteil ausgebildet sein. Alternativ dazu kann die Oberflächenkontur auch an einem Zwischenring ausgebildet sein, der zwischen der Rohrtulpe und dem Flansch angeordnet ist. Mit Hilfe eines derartigen Zwischenrings ist es insbesondere möglich, bereits vorhandene Flanschverbindungen zur erfindungsgemäßen Flanschverbindung nachzurüsten, also mit Hilfe des speziell geformten Zwischenrings mit einer verbesserten Dichtigkeit zu versehen.

Der Zwischenring kann beispielsweise Anbindungsabschnitte aufweisen, mit denen er in die Befestigungsstellen eingebunden werden kann. Hierdurch vereinfacht sich die Einbindung des Zwischenrings in die Flanschverbindung. Beispielsweise definieren die Anbindungsabschnitte eine Relativlage, insbesondere eine relative Drehlage, zwischen dem Zwischenring und den anderen Komponenten der Flanschverbindung.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch
- Fig. 1-5: jeweils eine stark vereinfachte Seitenansicht einer Flanschverbin- dung vor der Montage, bei unterschiedlichen Ausführungsformen,
- Fig. 6: eine Seitenansicht wie in den Fig. 1-5, jedoch bei montierter Flanschverbindung,
- Fig. 7-9: jeweils eine Seitenansicht der Flanschverbindung mit einem Zwi- schenring vor der Montage, bei verschiedenen Ausführungsformen,
- Fig. 10: eine Ansicht wie in den Fig. 7-9, jedoch bei montierter Flanschver- bindung und
- Fig. 11: eine perspektivische Ansicht eines Zwischenrings.

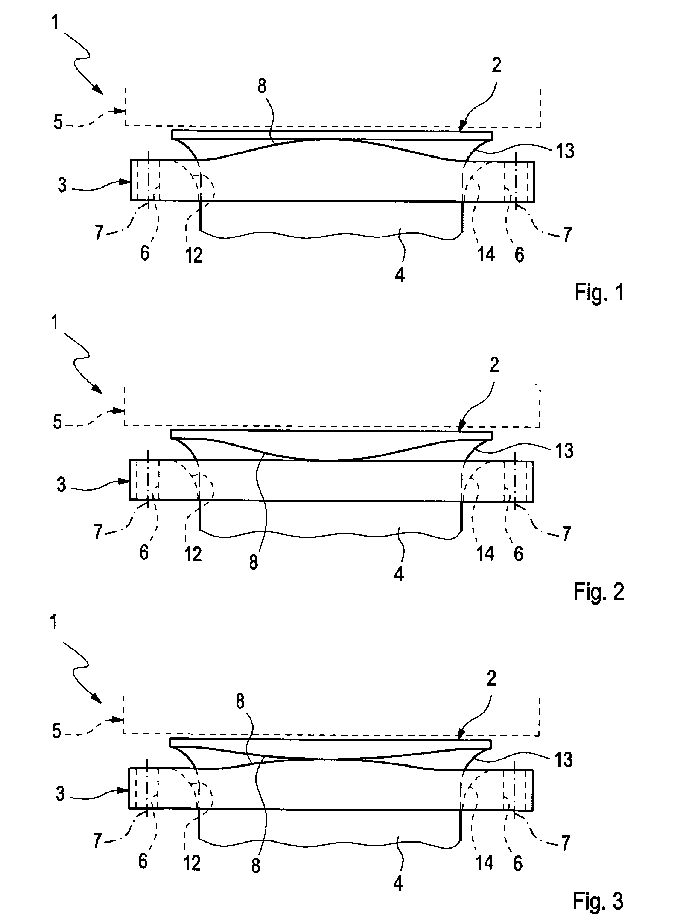

Entsprechend den Fig. 1-10 umfasst eine Flanschverbindung 1, die einen Bestandteil einer im Übrigen nicht dargestellten Abgasanlage einer Brennkraftmaschine bildet, eine Rohrtulpe 2 sowie einen ringförmigen Flansch 3. Die Flanschverbindung 1 dient innerhalb der Abgasanlage, die zusammen mit der zugehörigen Brennkraftmaschine in einem Kraftfahrzeug angeordnet sein kann, zum Befestigen eines Rohrkörpers 4 der Abgasanlage an einem anderen Bauteil 5 der Abgasanlage. Grundsätzlich kann es sich beim Bauteil 5 auch um ein beliebiges anderes Bauteil handeln, zum Beispiel um ein Bauteil der Brennkraftmaschine. Bevorzugt wird die Flanschverbindung 1 jedoch zum Verbinden des Rohrkörpers 4 mit einem Abgasanlagenbauteil 5 verwendet. Vorzugsweise, jedoch ohne Beschränkung der Allgemeinheit, handelt es sich beim Bauteil 5 um eine Turbine eines Abgasturboladers, an welche die Abgasanlage bzw. deren Rohrkörper 4 angeschlossen wird. Hierzu wird die Rohrtulpe 2 mit einem Auslass oder mit einem Einlass der Turbine, also des Bauteils 5 verbunden. Die Rohrtulpe 2 ist dabei am Endbereich des Rohrkörpers 4 ausgebildet. Der Begriff "Rohrtulpe" bezeichnet dabei einen axialen Endabschnitt des Rohrkörpers 4, der einen sich zum stirnseitigen Ende des Rohrkörpers 4 hin abgerundet aufweitenden Innenquerschnitt aufweist.

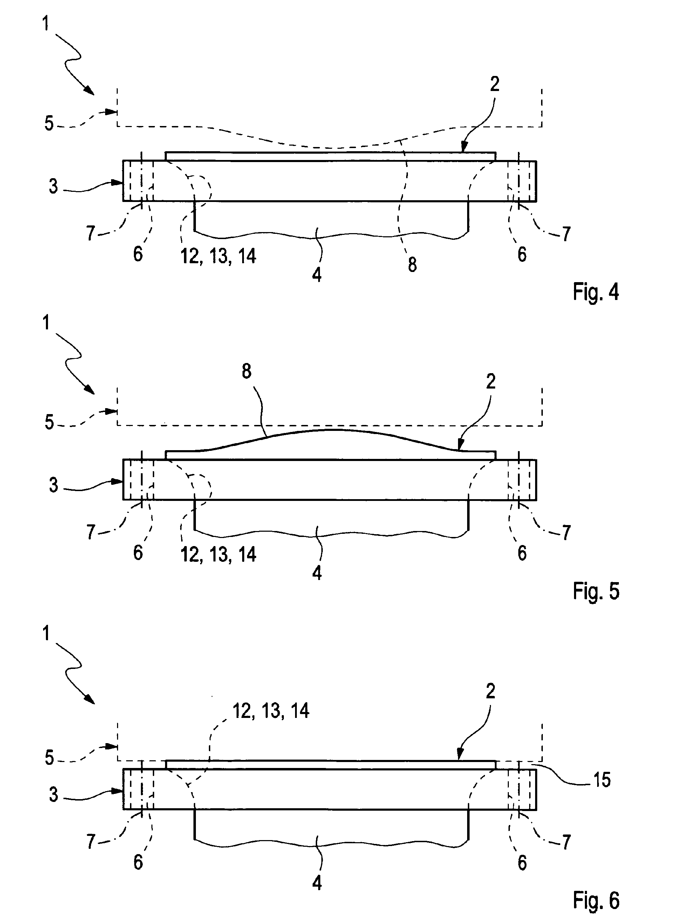

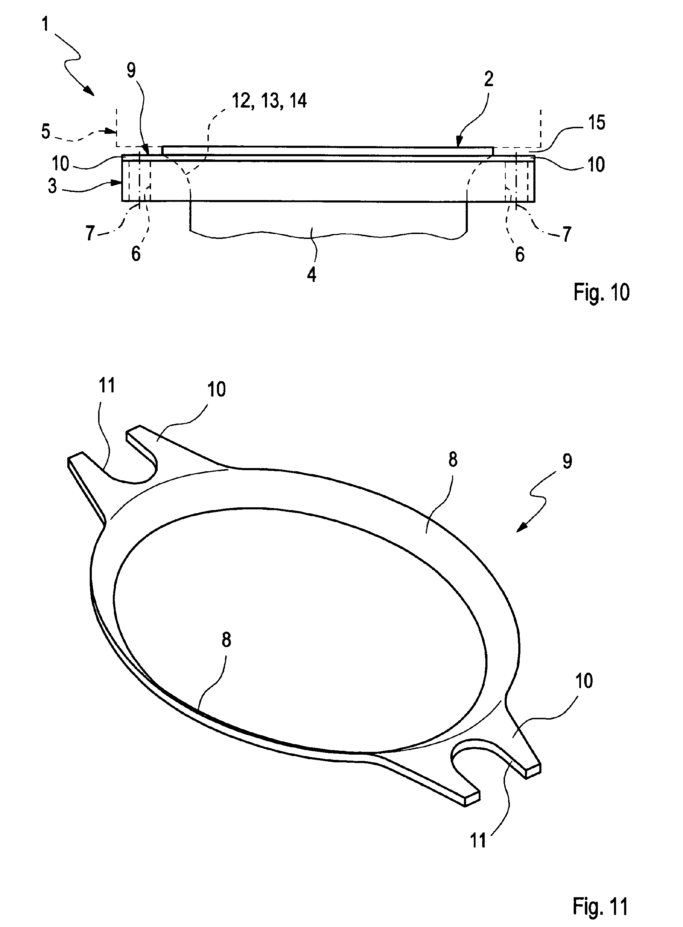

Der Flansch 3 ist ringförmig ausgestaltet und an einer vom anderen Bauteil 5 abgewandten Seite der Rohrtulpe 2 am Rohrkörper 4 angeordnet, wobei der Flansch 3 den Rohrkörper 4 koaxial umschließt. Die Flanschverbindung 1 besitzt zumindest zwei voneinander beabstandete, insbesondere diametral angeordnete Befestigungsstellen. Im Beispiel sind diese Befestigungsstellen durch Durchgangsöffnungen 6 und Verschraubungen 7, also durch Schraubstellen 6-7 gebildet. Der Flansch 3 besitzt im Beispiel demnach mehrere Durchgangsöffnungen 6, durch die hindurch der Flansch 3 mit dem anderen Bauteil 5 verschraubt werden kann. Entsprechende Verschraubungen sind in den Figuren durch strichpunktierte Linien angedeutet und mit 7 bezeichnet. In den Darstellungen der Fig. 1-5 und 7-9 sind diese Verschraubungen 7 noch nicht angezogen. Dementsprechend zeigen diese Figuren jeweils einen nicht fertig montierten Zustand der Flanschverbindung 1. Nur in den Darstellungen der Fig. 6 und 10 sind die Verschraubungen 7 angezogen. Dementsprechend zeigen diese Figuren einen fertig montierten Zustand der Flanschverbindung 1. Bemerkenswert ist, dass bei den gezeigten Ausführungsformen der Flansch 3 die Rohrtulpe 2 an deren Außenrand axial gegen das Bauteil 5 spannt, wobei insbesondere ein durch die Wandstärke des Rohrtulpenaußenrands bestimmter Axialspalt 15 ausgebildet ist. Ein solcher Axialspalt 15 entfällt bei bevorzugten Ausführungsformen durch eine entsprechende Formgebung. Bei optimaler Konturgebung liegt der Flansch 3 direkt am Bauteil 5 an. Dies ist für die Montage von Vorteil, da mit Momentabschaltung verschraubt werden kann. Sobald der jeweilige Schrauber die Flanschverbindung auf Block zieht, steigt das Anzugsmoment rapide an und erreicht das jeweils eingestellte Abschaltmoment.

In den gezeigten, bevorzugten Beispielen besitzt der jeweilige Flansch 3 genau zwei Durchgangsöffnungen 6, so dass letztlich auch nur genau zwei Verschraubungen 7 bzw. genau zwei Schraubstellen 7 vorgesehen sind. Die beiden Durchgangsöffnungen 6 sind dann am Flansch 3 einander diametral gegenüberliegend angeordnet. Grundsätzlich ist die Flanschverbindung 1 auch mit einem Flansch 3 realisierbar, der mehr als zwei Durchgangsöffnungen 6 aufweist. Alternativ sind auch andere Befestigungseinrichtungen möglich, wie Kniehebel oder dergleichen.

Zwischen dem Flansch 3 und dem anderen Bauteil 5 ist eine Oberflächenkontur 8 ausgebildet, die eine von einer zweidimensionalen Ebene abweichende dreidimensionale Form aufweist. Bei allen Darstellungen der Fig. 1 bis 5 und 7 bis 9 ist die Krümmung der Oberflächenkontur 8 zum besseren Verständnis übertrieben deutlich ausgeprägt. Die Oberflächen kontur 8 ist dabei so geformt, dass sie im montierten Zustand der Flanschverbindung 1 entsprechend den Fig. 6 und 10 eine Homogenisierung der Flächenpressung zwischen den durch die Durchgangsöffnungen 6 bzw. durch die Verschraubungen 7 definierten Schraubstellen bewirkt. Bei den Ausführungsformen der Fig. 1-3 und 7-9 ist diese Oberflächenkontur 8 zwischen dem Flansch 3 und der Rohrtulpe 2 ausgebildet bzw. angeordnet. Im Unterschied dazu ist die Oberflächenkontur 8 bei den Ausführungsformen der Fig. 4 und 5 zwischen der Rohrtulpe 2 und dem anderen Bauteil 5 ausgebildet bzw. angeordnet.

Des Weiteren zeigen die Fig. 1-5 und 7-9 jeweils nur die dem Betrachter zugewandte Seite zwischen den beiden Verschraubungen 7. Es ist klar, dass eine entsprechende Formgebung auch auf der vom Betrachter abgewandten Seite zwischen den Verschraubungen 7 vorhanden ist. Insbesondere ist die Oberflächenkontur 8 bezüglich einer Symmetrieebene, in der beide Verschraubungen 7 liegen, spiegelsymmetrisch gestaltet.

Im Einzelnen ist die Oberflächenkontur 8 bei der in Fig. 1 gezeigten Ausführungsform ausschließlich am Flansch 3 an einer der Rohrtulpe 2 zugewandten Seite ausgebildet. Bei der in Fig. 2 gezeigten Ausführungsform ist die Oberflächenkontur 8 ausschließlich an der Rohrtulpe 2 an einer dem Flansch 3 zugewandten Seite ausgebildet. Bei der in Fig. 3 gezeigten Ausführungsform ist die Oberflächenkontur 8 sowohl am Flansch 3 an einer der Rohrtulpe 2 zugewandten Seite als auch an der Rohrtulpe 2 an einer dem Flansch 3 zugewandten Seite ausgebildet. Bei der in Fig. 4 gezeigten Ausführungsform ist die Oberflächenkontur 8 ausschließlich am anderen Bauteil 5 an einer der Rohrtulpe 2 zugewandten Seite ausgebildet. Bei der in Fig. 5 gezeigten Ausführungsform ist die Oberflächenkontur 8 ausschließlich an der Rohrtulpe 2 an einer dem anderen Bauteil 5 zugewandten Seite ausgebildet. Es ist klar, dass auch weitere Varianten und Kombinationen für die Anordnung der Oberflächenkontur 8 möglich sind.

Bei allen gezeigten Ausführungsformen ist die Oberflächenkontur 8 zweckmäßig so geformt, dass sich der Flansch 3 beim Anziehen der Verschraubungen 7, also beim Montieren der Flanschverbindung 1 elastisch verformt, und zwar gezielt so, dass sich dadurch die gewünschte Homogenisierung der Flächenpressung zwischen den Schraubstellen 6, 7 einstellt. Während bei einer ebenen Kontur zwischen den miteinander zu verschraubenden Komponenten, hier also zwischen Flansch 3 und Rohrtulpe 2 sowie zwischen Rohrtulpe 2 und anderem Bauteil 5, die Verschraubungen 7 dazu führen, dass eine sich einstellende elastische Deformation des Flansches 3 zwischen den Schraubstellen 6, 7 eine Reduzierung der Flächenpressung bewirkt, erzeugt die hier vorgeschlagene Oberflächenkontur zwischen den Schraubstellen 6, 7 beim Montieren bzw. beim Anziehen der Schraubverbindungen 7 eine Erhöhung der Flächenpressung zwischen den Schraubstellen 6, 7, die so bemessen ist, dass die sich aus der elastischen Verformung des Flansches 3 resultierende Reduzierung der Flächenpressung zwischen den Schraubstellen 6, 7 mehr oder weniger egalisiert ist.

Die Oberflächenkontur 8 kann z.B. so geformt sein, dass sie sich zwischen den Schraubstellen 6, 7 bei den Varianten der Fig. 1, 3, 5, 7 und 9 zur Rohrtulpe 2 hin konvex wölbt, bei der Variante gemäß Fig. 5 zum anderen Bauteil 5 hin konvex wölbt und bei den Varianten der Fig. 2, 3, 4, 8 und 9 zum Flansch 3 hin konvex wölbt. Die konvexe Wölbung der Oberflächenkontur 8 ist dabei sehr gleichmäßig und "sanft" ausgeführt. Sie ist bezüglich einer mittig zwischen den Schraubstellen 7 verlaufenden und senkrecht zu einer Ebene, in der die Schraubstellen 7 liegen, verlaufenden Ebene bevorzugt spielsymmetrisch geformt. Insbesondere ist die Wölbung in den Fig. 1-5 und 7-9 übertrieben stark dargestellt bzw. mit deutlicher Überhöhung gezeichnet.

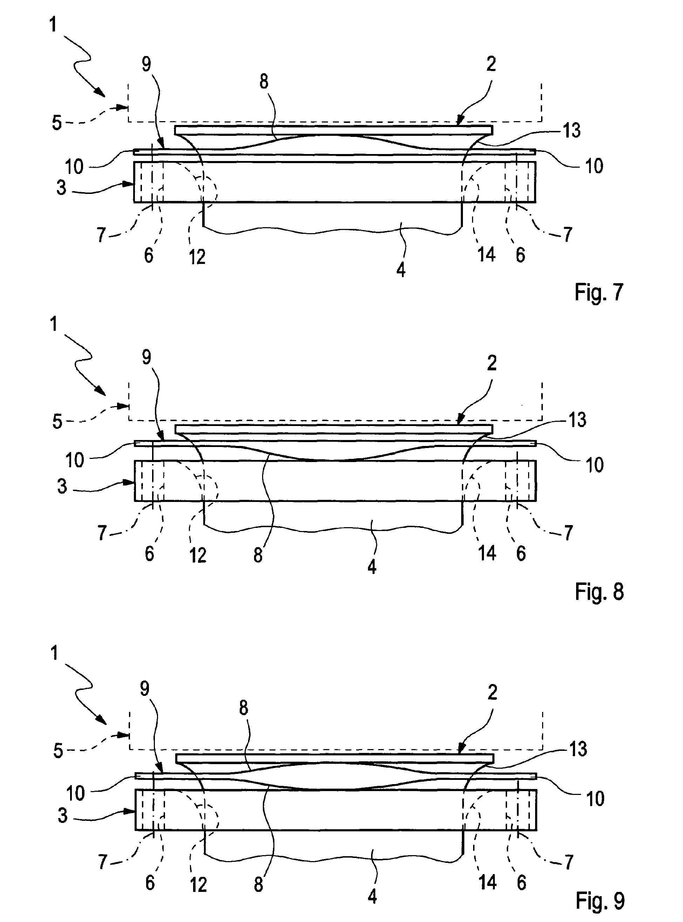

Während bei den Ausführungsformen der Fig. 1-6 die Oberflächenkontur 8 an zumindest einem der Bauteile Flansch 3, Rohrtulpe 2 und anderes Bauteil 5 ausgebildet bzw. ausgeformt ist, zeigen die Fig. 7-10 Ausführungsformen, bei denen die Oberflächenkontur 8 an einem Zwischenring 9 ausgebildet bzw. ausgeformt ist. Dieser Zwischenring 9 ist dabei zwischen der Rohrtulpe 2 und dem Flansch 3 angeordnet. Dementsprechend stützt sich im montierten Zustand der Flansch 3 über den Zwischenring 9 an der Rohrtulpe 2 ab. Fig. 7 zeigt eine Ausführungsform, bei welcher die Oberflächenkontur 8 ausschließlich an einer der Rohrtulpe 2 zugewandten Seite des Zwischenrings 9 ausgebildet ist. Fig. 8 zeigt eine Variante, bei welcher die Oberflächenkontur 8 ausschließlich an einer dem Flansch 3 zugewandten Seite des Zwischenrings 9 ausgebildet ist. Fig. 9 zeigt eine Ausführungsform, bei welcher die Oberflächenkontur 8 am Zwischenring 9 sowohl an einer der Rohrtulpe 2 zugewandten Seite als auch an einer dem Flansch 3 zugewandten Seite ausgebildet ist. Es ist klar, dass auch Kombinationen der Ausführungsformen der Fig. 7 bis 10 mit den Ausführungsformen der Fig. 1 bis 6 möglich sind.

Der Zwischenring 9 kann entsprechend den Fig. 7-11 Anbindungsabschnitte 10 aufweisen, mit denen er in die Verschraubungen 7 eingebunden werden kann. Diese Anbindungsabschnitte 10 ragen beispielsweise bis in den Bereich der Durchgangsöffnungen 6 hinein und können entsprechende Aussparungen 11 aufweisen, so dass die Verschraubungen 7 durch die Durchgangsöffnungen 6 und durch die Aussparungen 11 hindurchführbar sind. Der Zwischenring 9 kann beispielsweise als Blechformteil ausgestaltet bzw. hergestellt sein. Die Aussparungen 11 sind nur exemplarisch gezeigt. Die Anbindungsabschnitte 10 können auch auf andere, geeignete Weise ausgestaltet sein.

Entsprechend den Fig. 1-10 kann die Rohrtulpe 2 an einer dem Flansch 3 zugewandten Seite außen konisch geformt sein. Komplementär dazu kann eine Durchgangsöffnung 12 des Flansches 3, in welcher der Rohrkörper 4 den ringförmigen Flansch 3 durchdringt, ebenfalls konisch geformt sein. Die Rohrtulpe 2 weist somit einen Außenkonus 13 auf, während der Flansch 3 einen dazu komplementären Innenkonus 14 besitzt. Um den Zwischenring 9 besser in diese Kontaktzone zwischen Flansch 3 und Rohrtulpe 2 einpassen zu können, kann auch der Zwischenring 9 entsprechend Fig. 11 konisch geformt sein. Zur Realisierung der gewünschten Oberflächenkontur 8 kann der Zwischenring 9 in seiner Umfangsrichtung eine variierende Wandstärke aufweisen. Dabei nimmt diese Wandstärke in der Umfangsrichtung von einer Schraubstelle 6, 7 bis zur nächsten bzw. bis zur anderen Schraubstelle 6, 7 zunächst zu und dann wieder ab. Hierdurch kann die gewünschte Wölbung zur Realisierung der Oberflächenkontur 8 erzeugt werden. Zweckmäßig ist der Zwischenring 9 in seinem konischen Bereich sowohl mit einem Innenkonus als auch mit einem Außenkonus versehen.

## Patentansprüche

1. Flanschverbindung einer Abgasanlage einer Brennkraftmaschine, insbesondere eines Kraftfahrzeugs, zum Befestigen eines Rohrkörpers (4) der Abgasanlage an einem anderen Bauteil (5), zum Beispiel der Abgasanlage oder der Brennkraftmaschine, mit einem ringförmigen Flansch (3), der mehrere Befestigungsstellen (6, 7) zum Verbinden mit dem anderen Bauteil (5) aufweist,
**dadurch gekennzeichnet,**
- **dass** am Endbereich des Rohrkörpers (4) eine Rohrtulpe (2) ausgebildet ist,
- **dass** der Flansch (3) den Rohrkörper (4) an einer vom anderen Bauteil (5) abgewandten Seite der Rohrtulpe (2) umschließt,
- **dass** eine Oberflächenkontur (8) zwischen dem Flansch (3) und dem anderen Bauteil (5) vorgesehen ist, die so geformt ist, dass sie im montierten Zustand eine Homogenisierung der Flächenpressung zwischen den Befestigungsstellen (6, 7) bewirkt,
- **dass** die Oberflächenkontur (8) an der Rohrtulpe (2) und/oder am anderen Bauteil (5) und/oder am Flansch (3) ausgebildet ist.

2. Flanschverbindung nach Anspruch 1,
**dadurch gekennzeichnet,**
**dass** die Oberflächenkontur (8) zwischen dem Flansch (3) und der Rohrtulpe (2) oder zwischen der Rohrtulpe (2) und dem anderen Bauteil (5) ausgebildet und/oder angeordnet ist.

3. Flanschverbindung nach Anspruch 1 oder 2,
**dadurch gekennzeichnet,**
**dass** die Oberflächenkontur (8) so geformt ist, dass der Flansch (3) im montierten Zustand elastisch verformt ist, derart, dass sich die Homogenisierung der Flächenpressung zwischen den Befestigungsstellen (6, 7) ergibt.

4. Flanschverbindung nach einem der Ansprüche 1 bis 3,
**dadurch gekennzeichnet,**
**dass** die Oberflächenkontur (8) zwischen den Befestigungsstellen (6, 7) zur Rohrtulpe (2) hin und/oder zum anderen Bauteil (5) hin und/oder zum Flansch (3) hin konvex gewölbt ist.

5. Flanschverbindung einer Abgasanlage einer Brennkraftmaschine, insbesondere eines Kraftfahrzeugs, zum Befestigen eines Rohrkörpers (4) der Abgasanlage an einem anderen Bauteil (5), zum Beispiel der Abgasanlage oder der Brennkraftmaschine, mit einem ringförmigen Flansch (3), der mehrere Befestigungsstellen (6, 7) zum Verbinden mit dem anderen Bauteil (5) aufweist,
**dadurch gekennzeichnet,**
- **dass** am Endbereich des Rohrkörpers (4) eine Rohrtulpe (2) ausgebildet ist,
- **dass** der Flansch (3) den Rohrkörper (4) an einer vom anderen Bauteil (5) abgewandten Seite der Rohrtulpe (2) umschließt,
- **dass** zwischen der Rohrtulpe (2) und dem Flansch (3) ein Zwischenring (9) angeordnet ist.
- **dass** eine Oberflächenkontur (8) zwischen dem Flansch (3) und dem anderen Bauteil (5) vorgesehen ist, die so geformt ist, dass sie im montierten Zustand eine Homogenisierung der Flächenpressung zwischen den Befestigungsstellen (6, 7) bewirkt,
- **dass** die Oberflächenkontur (8) zumindest am Zwischenring (9) ausgebildet ist.

6. Flanschverbindung nach Anspruch 5,
**dadurch gekennzeichnet,**
**dass** die Oberflächenkontur (8) außerdem an der Rohrtulpe (2) und/oder am anderen Bauteil (5) und/oder am Flansch (3) ausgebildet ist.

7. Flanschverbindung nach Anspruch 5 oder 6,
**dadurch gekennzeichnet,**
**dass** der Zwischenring (9) Anbindungsabschnitte (10) aufweist, mit denen er in die Befestigungsstellen (6, 7) einbindbar ist.

8. Flanschverbindung nach einem der Ansprüche 5 bis 7,
**dadurch gekennzeichnet,**
**dass** der Zwischenring (9) ein Blechformteil ist.

9. Flanschverbindung nach einem der Ansprüche 5 bis 8,
**dadurch gekennzeichnet,**
**dass** der Zwischenring (9) konisch geformt ist.

10. Flanschverbindung nach einem der Ansprüche 5 bis 9,
**dadurch gekennzeichnet,**
**dass** der Zwischenring (9) zur Realisierung der Oberflächenkontur (8) eine in Umfangsrichtung variierende Wandstärke aufweist.

11. Flanschverbindung nach Anspruch 10,
**dadurch gekennzeichnet,**
**dass** die Wandstärke des Zwischenrings (9) in der Umfangsrichtung von einer Schraubstelle (6, 9) zur benachbarten Schraubstelle (6, 9) erst zunimmt und dann wieder abnimmt.

12. Flanschverbindung nach einem der Ansprüche 1 bis 11,
**dadurch gekennzeichnet,**
**dass** der Flansch (3) genau zwei sich diametral gegenüberliegende Befestigungsstellen (6, 7) aufweist.

13. Flanschverbindung nach einem der Ansprüche 1 bis 12,
**dadurch gekennzeichnet,**
**dass** der Flansch (3) an seiner der Rohrtulpe (2) zugewandten Seite einen Innenkonus (14) aufweist.

14. Flanschverbindung nach einem der Ansprüche 1 bis 13,
**dadurch gekennzeichnet,**
**dass** die Befestigungsstellen jeweils durch eine am Flansch (3) ausgebildete Durchgangsöffnung (6) für eine Verschraubung (7) mit dem anderen Bauteil (5) gebildet sind.

## Claims

1. A flange connection of an exhaust system of an internal combustion engine, more preferably of a motor vehicle, for fastening a pipe body (4) of the exhaust system to another component (5), for example of the exhaust system or of the internal combustion engine, comprising a ring-shaped flange (3) which comprises a plurality of fastening points (6, 7) for connecting with the other component (5), **characterized in**
- **that** a pipe flare (2) is formed on the end region of the pipe body (4),
- **that** the flange (3) encloses the pipe body (4) on a side of the pipe flare (2) facing away from the other component (5),
- **that** a surface contour (8) is provided between the flange (3) and the other component (5), said surface contour (8) is formed so that in the assembled state it brings about homogenisation of the surface pressure between the fastening points (6, 7),
- **that** the surface contour (8) is formed on the pipe flare (2) and/or on the other component (5) and/or on the flange (3).

2. The flange connection according to Claim 1,
**characterized**
**in that** the surface contour (8) is embodied and/or arranged between the flange (3) and the pipe flare (2) or between the pipe flare (2) and the other component (5).

3. The flange connection according to Claim 1 or 2,
**characterized**
**in that** the surface contour (8) is formed so that the flange (3) in the assembled state is elastically deformed in such a manner that homogenisation of the surface pressure between the fastening points (6, 7) results.

4. The flange connection according to any one of the Claims 1 to 3,
**characterized**
**in that** the surface contour (8) is convexly curved between the fastening points (6, 7) towards the pipe flare (2) and/or towards the other component (5) and/or towards the flange (3).

5. A flange connection of an exhaust system of an internal combustion engine, more preferably of a motor vehicle, for fastening a pipe body (4) of the exhaust system to another component (5), for example of the exhaust system or of the internal combustion engine, comprising a ring-shaped flange (3) and which comprises a plurality of fastening points (6, 7) for connecting with the other component (5),
**characterized in**
- **that** a pipe flare (2) is formed on the end region of the pipe body (4),
- **that** the flange (3) encloses the pipe body (4) on a side of the pipe flare (2) facing away from the other component (5),
- **that** an intermediate ring (9) is arranged between the pipe flare (2) and the flange (3),
- **that** a surface contour (8) is provided between the flange (3) and the other component (5), said surface contour (8) is formed so that in the assembled state it brings about homogenisation of the surface pressure between the fastening points (6, 7),
- **that** the surface contour (8) is formed at least on the intermediate ring (9).

6. The flange connection according to Claim 5,
**characterized**
**in that** the surface contour (8) is additionally formed on the pipe flare (2) and/or on the other component (5) and/or on the flange (3).

7. The flange connection according to Claim 5 or 6,
**characterized**
**in that** the intermediate ring (9) comprises connecting sections (10) with which said intermediate ring can be incorporated in the fastening points (6, 7).

8. The flange connection according to any one of the Claims 5 to 7,
**characterized**
**in that** the intermediate ring (9) is a formed sheet metal part.

9. The flange connection according to any one of the Claims 5 to 8,
**characterized**
**in that** the intermediate ring (9) is conically shaped.

10. The flange connection according to any one of the Claims 5 to 9,
**characterized**
**in that** the intermediate ring (9) for realising the surface contour (8) comprises a wall thickness that is varying in circumferential direction.

11. The flange connection according to Claim 10,
**characterized**
**in that** the wall thickness of the intermediate ring (9) in the circumferential direction initially increases from a screwing point (6, 9) to the neighbouring screwing point (6, 9) after which it decreases again.

12. The flange connection according to any one of the Claims 1 to 11,
**characterized**
**in that** the flange (3) comprises two fastening points (6, 7) which are located exactly diametrically opposite each other.

13. The flange connection according to any one of the Claims 1 to 12,
**characterized**
**in that** the flange (3) on its side facing the pipe flare (2) comprises an internal cone (14).

14. The flange connection according to any one of the Claims 1 to 13,
**characterized**
**in that** the fastening points are each formed through a through-opening (6) for a screw connection (7) with the other component (5) formed on the flange (3).

## Revendications

1. Liaison par bride d'un système d'échappement d'un moteur à combustion interne, en particulier d'un véhicule automobile, pour la fixation d'un corps tubulaire (4) du système d'échappement sur un autre composant (5), par exemple le système d'échappement ou le moteur à combustion interne, dotée d'une bride (3) annulaire, qui présente plusieurs points de fixation (6, 7) pour la liaison avec l'autre composant (5),
**caractérisée**
- **en ce qu'**une tulipe tubulaire (2) est conçue sur la zone d'extrémité du corps tubulaire (4),
- **en ce que** la bride (3) entoure le corps tubulaire (4) sur un côté, opposé à l'autre composant (5), de la tulipe tubulaire (2),
- **en ce qu'**un contour de surface (8) est prévu entre la bride (3) et l'autre composant (5), qui est formé de telle sorte que, dans l'état monté, il entraîne une homogénéisation de la pression superficielle entre les points de fixation (6, 7),
- **en ce que** le contour de surface (8) est conçu sur la tulipe tubulaire (2) et/ou sur l'autre composant (5) et/ou sur la bride (3).

2. Liaison par bride selon la revendication 1,
**caractérisée en ce que**
le contour de surface (8) est conçu et/ou disposé entre la bride (3) et la tulipe tubulaire (2) ou entre la tulipe tubulaire (2) et l'autre composant (5).

3. Liaison par bride selon la revendication 1 ou 2,
**caractérisée en ce que**
le contour de surface (8) est formé de telle sorte que la bride (3) est déformée élastiquement dans l'état monté, de telle sorte qu'on obtient l'homogénéisation de la pression superficielle entre les points de fixation (6, 7).

4. Liaison par bride selon l'une des revendications 1 à 3,
**caractérisée en ce que**
le contour de surface (8) entre les points de fixation (6, 7) est courbé de façon convexe en direction de la tulipe tubulaire (2) et/ou de l'autre composant (5) et/ou de la bride (3).

5. Liaison par bride d'un système d'échappement d'un moteur à combustion interne, en particulier d'un véhicule automobile, pour la fixation d'un corps tubulaire (4) du système d'échappement sur un autre composant (5), par exemple le système d'échappement ou le moteur à combustion interne, dotée d'une bride (3) annulaire, qui présente plusieurs points de fixation (6, 7) pour la liaison avec l'autre composant (5),
**caractérisée en ce que**
- une tulipe tubulaire (2) est conçue sur la zone d'extrémité du corps tubulaire (4),
- **en ce que** la bride (3) entoure le corps tubulaire (4) sur un côté, opposé à l'autre composant (5), de la tulipe tubulaire (2),
- **en ce qu'**une bague intermédiaire (9) est disposée entre la tulipe tubulaire (2) et la bride (3),
- **en ce qu'**un contour de surface (8) est prévu entre la bride (3) et l'autre composant (5), qui est formé de telle sorte que, dans l'état monté, il entraîne une homogénéisation de la pression superficielle entre les points de fixation (6, 7),
- **en ce que** le contour de surface (8) est conçu au moins sur la bague intermédiaire (9).

6. Liaison par bride selon la revendication 5,
**caractérisée en ce que** le contour de surface (8) est réalisé également sur la tulipe tubulaire (2) et/ou sur l'autre composant (5) et/ou sur la bride (3).

7. Liaison par bride selon la revendication 5 ou 6,
**caractérisée en ce que**
la bague intermédiaire (9) présente des parties de rattachement (10), avec lesquelles elle peut être engagée dans les points de fixation (6, 7).

8. Liaison par bride selon l'une des revendications 5 à 7,
**caractérisée en ce que**
la bague intermédiaire (9) est une pièce formée en tôle.

9. Liaison par bride selon l'une des revendications 5 à 8,
**caractérisée en ce que**
la bague intermédiaire (9) est formée de façon conique.

10. Liaison par bride selon l'une des revendications 5 à 9,
**caractérisée en ce que**
la bague intermédiaire (9) pour la réalisation du contour de surface (8) présente une épaisseur de paroi variant dans le sens périphérique.

11. Liaison par bride selon la revendication 10,
**caractérisée en ce que**
l'épaisseur de paroi de la bague intermédiaire (9) augmente dans le sens périphérique depuis un point de vissage (6, 9), vers le point de vissage (6, 9) voisin et diminue ensuite à nouveau.

12. Liaison par bride selon les revendications 1 à 11,
**caractérisée en ce que**
la bride (3) présente exactement deux points de fixation (6, 7) diamétralement opposés.

13. Liaison par bride selon l'une des revendications 1 à 12,
**caractérisée en ce que**
la bride (3) présente un cône intérieur (14) sur son côté tourné vers la tulipe tubulaire (2).

14. Liaison par bride selon l'une des revendications 1 à 13,
**caractérisée en ce que**
les points de fixation sont formés respectivement par une ouverture de passage (6) conçue sur la bride (3) pour un assemblage vissé (7) avec l'autre composant (5).
